**Europäisches Patentamt**

**European Patent Office**

**Office européen des brevets**

(11) Veröffentlichungsnummer: **0 071 111**

**B1**

(12) # EUROPÄISCHE PATENTSCHRIFT

(45) Veröffentlichungstag der Patentschrift:
05.11.86

(51) Int. Cl.⁴: **B 01 D 53/00,** F 02 C 3/20

(21) Anmeldenummer: 82106411.0

(22) Anmeldetag: 16.07.82

(54) Verfahren und Vorrichtung zur Entsorgung von kohlenwasserstoffhaltigen Erdgas-Begleitprodukten durch Verbrennung.

(30) Priorität: 24.07.81 DE 3129223

(43) Veröffentlichungstag der Anmeldung:
09.02.83 Patentblatt 83/6

(45) Bekanntmachung des Hinweises auf die Patenterteilung:
05.11.86 Patentblatt 86/45

(84) Benannte Vertragsstaaten:
BE FR GB IT LU NL

(56) Entgegenhaltungen:
DE-A-2 524 861
FR-A-1 035 876
GB-A-2 097 476

DIESEL ENGINEERING, Band 73, Nr. 795, 1977, Seiten 240-242, Maidstone, GB; "First coberrow compressor set completed"
HYDROCARBON PROCESSING, Band 50, Nr. 4, April 1971, Seiten 93-95, Houston, US; "NG/SNG handbook"

(73) Patentinhaber: Pipeline Engineering Gesellschaft für Planung, Bau- und Betriebsüberwachung von Fernleitungen mit Beschränkter Haftung, Moltkestrasse 76, D-4300 Essen 1 (DE)

(72) Erfinder: Urban, Martin, Dipl.- Ing., Cranger Strasse 46, D-4660 Gelsenkirchen- Buer (DE)
Erfinder: Baumeister, Hans, Ing. grad., Mühlenhang 13, D-4300 Essen (DE)
Erfinder: Klupiec, Jürgen, Ing. grad., Emscher Strasse 34, D-4300 Essen 12 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Entsorgung von kohlenwasserstoffhaltigen Erdgas-Begleitprodukten, die auf einer mit mindestens einer Gasturbine ausgestatteten Erdgas-Kompressorstation oder Förder-Plattform ggf. durch Trocknung des Erdgases anfallen durch Verbrennung.

Zum Transport von Erdgas über größere Entfernungen sind weltweit gasturbinengetriebene Erdgas-Kompressoren im Einsatz, die auf Kompressorstationen Aufstellung finden. Die zum Gastransport installierte Stationsleistung liegt dabei zwischen 20 und 200 MW, was einer Transportkapazität von ca. 1 bis 5 Mio m3/h ($V_n$) entspricht. Zum Antrieb der Transport-Kompressoren werden dabei Gasturbinen eingesetzt, die mit Erdgas gefeuert werden.

Zur Reduzierung des Wassergehaltes des Erdgases sind insbesondere auf Erdgas-Übernahmestationen und auf Gasspeicherstationen Trocknungsanlagen installiert, um das Erdgas auf Wassertaupunkte einzustellen, die für den weiteren Transport sowie für die industrielle Nutzung erforderlich sind. Dazu werden insbesondere Physikalische Gaswäschen eingesetzt, die zwangsläufig über Lösungsgleichgewichte mit dem aus dem Erdgas abzutrennenden Wasser entsprechende Kohlenwasserstoff-Fraktionen mit abscheiden. Da diese Fraktionen nicht wieder in den Erdgasstrom eingesetzt werden können, ist die Station von erdgasfremden Kohlenwasserstoffen zu entsorgen. Dabei fallen Kohlenwasserstoff-Fraktionen zwischen $C_2$ und $C_{20}+$ sowohl kontinuierlich als auch diskontinuierlich bzw. auch schwallweise auf den Stationen an.

Gleichermaßen fallen Erdgas-Begleitprodukte auf Förder-Plattformen an, u. z. unabhängig von der etwaigen Durchführung einer Gastrockung im obigen Sinne.

Nach dem Stand der Technik geschieht die Entsorgung der Stationen von diesen kohlenwasserstoffhaltigen Erdgas-Begleitprodukten durch Zwischenlagerung und Abtransport sowie ggf. anschließende Vernichtung derselben in Verbrennungsmuffeln. Die Verbrennung der zu entsorgenden Begleitprodukte direkt in den Brennkammern der Gasturbinen wird nicht durchgeführt, da dies in den gängigen Industrie-Gasturbinen wegen der Schwankungen in der Menge der anfallenden Produkte, in deren Konzentration und damit in deren Heizwert, in den Verhältnissen zwischen Flüssig- und Gasphase sowie im Wassergehalt nicht möglich ist.

Der Erfindung liegt die Aufgabe zugrunde, eine Möglichkeit dafür zu schaffen, die Energie der Begleitprodukte zum Antrieb der Erdgas-Kompressoren nutzbar zu machen.

Zur Lösung dieser Aufgabe ist das Verfahren nach der Erfindung dadurch gekennzeichnet, daß die heißen Verbrennungsgase der vollständig verbrannten Begleitprodukte der verdichteten Verbrennungsluft der Gasturbine beigemischt werden.

Auf diese Weise lassen sich sämtliche anfallenden Begleitprodukte zuverlässig vernichten, und zwar, sofern erwünscht, direkt nach ihrem Anfall. Die erzeugte Verbrennungswärme dient der Vorwärmung der verdichteten Verbrennungsluft der Gasturbine und kann somit für den Antrieb der Erdgas-Kompressoren nutzbar gemacht werden.

Vorzugsweise wird die Gasturbine unabhängig von der Menge und Zusammensetzung der zu verbrennenden Begleitprodukte durch Änderung des Primärenergieeinsatzes auf konstante Leistungsabgabe geregelt. Es ergibt sich durch die Verbrennung der Begleitprodukte also eine direkte Verminderung der der Gasturbine zugeführten Primärenergie, und zwar ohne weiteres bis zu 30 % und mehr. Die Regelung ist so flexibel, daß die Menge der Begleitprodukte, bezogen auf die Auslegungsmenge, von 10 - 130 % schwanken kann, ohne die Leistungsabgabe der Gasturbine zu beeinflussen.

Nach einem weiteren vorteilhaften Merkmal der Erfindung werden die Begleitprodukte mit mindestens einem Teilstrom der Verbrennungsluft, der hinter dem Verdichter der Gasturbine abgezweigt wird, gemischt und dann verbrannt. Die Verbrennung der Begleitprodukte geht also bei demjenigen Druck vor sich, den der Verdichter der Gasturbine liefert. Um die anschließende Beimischung der Verbrennungsgase zur Verbrennungsluft zu ermöglichen, muß dann nur noch derjenige Druckverlust ausgeglichen werden, der sich bei der Verbrennung der Begleitprodukte ergibt. Aber auch dies läßt sich erfindungsgemäß vermeiden, wenn nämlich die Beimischung der heißen Verbrennungsgase zur Verbrennungsluft der Gasturbine im Anschluß an eine Vorwärmung dieser Verbrennungsluft mittels der Abgase der Gasturbine erfolgt. Da der Druckverlust bei der Abgas-Vorwärmung größer ist als der bei der Verbrennung der Begleitprodukte, können deren Verbrennungsgase ohne weiteres der Verbrennungsluft zuströmen. Dabei besteht erfindungsgemäß die Möglichkeit, daß die gasförmige und flüssige Phase der Begleitprodukte je mit einem gesonderten Teilstrom der Verbrennungsluft gemischt und dann gemeinsam vollständig verbrannt werden. Man erzielt eine optimale Einstellung der Brenner für die jeweilige Phase und ferner einen sehr geringen Druckverlust bei der Verbrennung.

Gegebenenfalls kann es vorteilhaft sein, die Begleitprodukte vor der Verbrennung zu entwässern und/oder zu entschwefeln.

Die Erfindung richtet sich ferner auf eine Vorrichtung zum Durchführen des obigen Verfahrens, mit einem von einer Gasturbine angetriebenen Erdgas-Kompressor und mit einer Trockenvorrichtung für das Erdgas, wobei diese Vorrichtung erfindungsgemäß gekennzeichnet ist durch eine Vorbrennkammer, die einerseits mindestens eine Zuleitung für die Begleitprodukte aufweist und über mindestens eine Abzweigleitung mit dem Verdichter der Gasturbine in Verbindung steht sowie andererseits mit einer Mischkammer kombiniert ist, die in der Leitung für Verbrennungsluft zwischen dem Verdichter und der Brennkammer der Gasturbine hinter einem Rekuperator liegt.

Es wurde gefunden, daß sich diese Vorrichtung in besonders vorteilhafter Weise zur Durchführung des erfindungsgemäßen Verfahrens eignet.

Dies gilt auch für eine weitere Ausgestaltung der Vorrichtung, die dadurch gekennzeichnet ist, daß der Trockenvorrichtung eine mit einem Wasserabscheider versehene Trennvorrichtung nachgeschaltet ist, die über die Zuleitungen für die flüssige und die gasförmige Phase der Begleitprodukte mit der Vorbrennkammer in Verbindung steht, wobei die Zuleitungen eine Pumpe bzw. einen Kompressor enthalten. Bei der Trockenvorrichtung kann es sich um einen auf dem hohen Erdgasdruck arbeitenden Absorber mit einem nachgeschalteten, praktisch drucklosen Desorber handeln. Die nachgeschaltete Trennvorrichtung arbeitet ebenfalls drucklos. Die Pumpe und der Kompressor bringen dann die Begleitprodukte auf den hinter dem Verdichter der Gasturbine herrschenden Systemdruck.

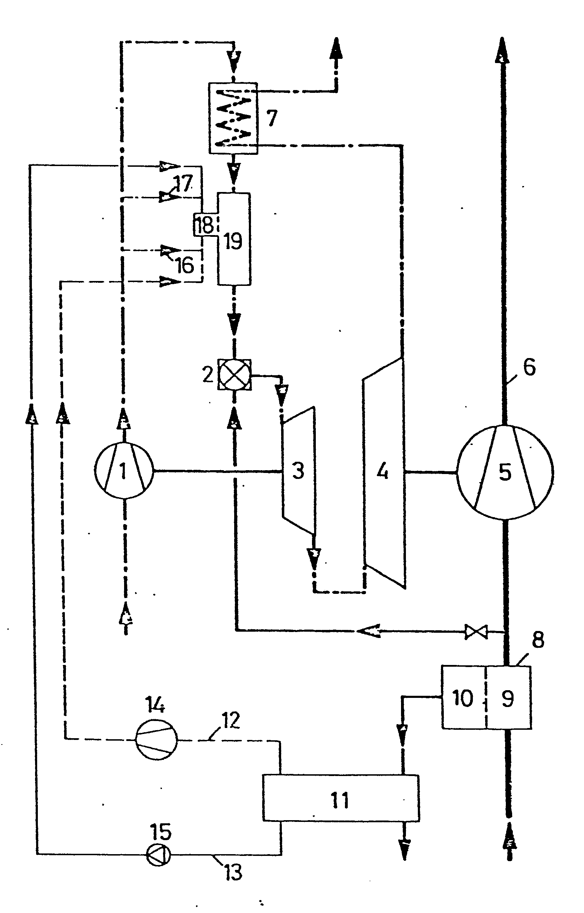

Die Erfindung wird im folgenden anhand eines bevorzugten Ausführungsbeispiels im Zusammenhang mit der beiliegenden Zeichnung näher erläutert. Die Zeichnung zeigt ein Blockdiagramm einer erfindungsgemäßen Vorrichtung.

Die Vorrichtung umfaßt eine Gasturbine, bestehend aus einem Verdichter 1, einer Brennkammer 2, einer Hochdruck-Turbinenstufe 3 und einer Niederdruck-Turbinenstufe 4. Die Gasturbine dient zum Antrieb eines Erdgas-Kompressors 5, der in einer Erdgasleitung 6 liegt. Aus dieser wird Erdgas abgezweigt und in die Brennkammer 2 geliefert.

Der Verdichter 1 komprimiert die von mechanischen Verunreinigungen befreite Verbrennungsluft für die Gasturbine und fördert sie durch einen Rekuperator 7, der eine Vorwärmung unter Benutzung der aus der Niederdruck-Turbinenstufe 4 stammenden Abgase durchführt. Die erreichte Temperatur der Verbrennungsluft liegt zwischen 250 und 300° C, vorzugsweise bei etwa 285° C.

Ferner ist eine Trockenvorrichtung 8 vorgesehen, bestehend aus einem Absorber 9 und einem Desorber 10. Aus dem Desorber 10 wird ein Gemisch aus Wasser sowie gasförmigen und flüssigen Kohlenwasserstoffen entnommen und einem Trennbehälter 11 zugeleitet, der diese drei Phasen voneinander absondert. Das Wasser wird dem Prozeß entzogen, während die gasförmigen und flüssigen Kohlenwasserstoffe durch entsprechende Leitungen 12 und 13 abtransportiert werden. In der Leitung 12 liegt ein Strippgas-Kompressor 14, während die Leitung 13 eine Kondensat-Pumpe 15 enthält.

Die flüssigen und gasförmigen Kohlenwasserstoffe werden mit zugehörigen Teilströmen der vom Verdichter 1 der Gasturbine gelieferten Verbrennungsluft gemischt. Die Teilströme stammen aus entsprechenden Abzweigleitungen 16 und 17.

Die gemeinsame Verbrennung der Kohlenwasserstoffe erfolgt bei Temperaturen zwischen 800 und 1200° C, vorzugsweise 1.000° C, in einer Vorbrennkammer 18, die mit einer Mischkammer 19 kombiniert ist. In letzterer werden die Verbrennungsgase der Kohlenwasserstoffe mit der Verbrennungsluft für die Gasturbine gemischt. Es ergibt sich eine Temperaturerhöhung von ohne weiteres bis zu 150 °C und mehr, und zwar je nach Anfall der gasförmigen und/oder flüssigen Kohlenwasserstoffe sowie nach deren Konzentrationen und Wassergehalte.

Es liegt im Rahmen der Erfindung, auch bereits vorhandene Erdgas-Kompressorstationen entsprechend umzurüsten. Eine Modifizierung der aus Gasturbine und Erdgas-Kompressor bestehenden Kernmaschine ist dazu nicht erforderlich. Vielmehr finden Vorbrennkammer und Mischkammer außerhalb der Maschinenhalle im Freien in der Nähe des Rekuperators Aufstellung.

Es folgen zwei Berechnungsbeispiele, und zwar auf der Basis eines Erdgasdurchsatzes von 100.000 Nm³/h.

**Beispiel 1**

Erdgas mit hoher Wasserbeladung
- Drücke: 40 bar-vor der Trocknung 8
38 bar hinter der Trocknung 8
Wassertaupunkt: + 10° C vor der Trocknung 8 - 6° C hinter der Trocknung 8
- Wasserbeladung vor der Trocknung 8 0,45 gr/Nm Erdgas
- Analyse Erdgas
$CH_4$ 93 Vol%
$C_2$ 2,5 "
$C_3$ 1,0 "
$C_4$ 0,25 "
$C_5$ 0,25 "
$N_2$ 2,75 "
$CO_2$ 0,25 "
100,00 Vol. %
- Zur Entsorgung in 11 anfallende Mengen
Wasser 33 kg
org. Phase $C_2$+ 10 kg
Strippgas 8 Nm³
Unterer Heizwert der Summe der org. Phase und des Strippgases 760.000 kJ
- Menge Verbrennungsluft aus Rekuperator 7 13.900 Nm³
- Luftaufheizung in Mischkammer 19 40° C
- Brenngaseinsparung (Primärenergie) 8,3 %

**Beispiel 2**

Erdgas mit niedriger Wasserbeladung
- Drücke: 40 bar- vor der Trocknung 8
  39 bar hinter der Trocknung 8
- Wassertaupunkt: 0 °C vor der Trocknung 8
- 6 °C hinter der Trocknung 8
- Wasserbeladung vor der Trocknung 8 0,18 gr/Nm³ Erdgas
- Analyse Erdgas
  $CH_4$ 90 Vol. %
  $C_2$ 4,0 "
  $C_3$ 3,0 "
  $C_4$ 2,0 " + $C_5$ 0,7 "
  $N_2$ 0,2 "'
  $CO_2$ 0,1 "
  100,0 Vol. %
- Zur Entsorgung in 11 anfallende Mengen:
  Wasser 6 kg
  org. phase $C_2$+ 35 kg
  Strippgas 20 Nm³
  Heizwert der Summe der
  org. Phase und des
  Strippgases 2.300.000 kJ
- Menge Verbrennungsluft
  aus Rekuperator 7 13.350 Nm³
- Luftaufheizung in Misch
  kammer 19 129 °C
- Brenngaseinsparung
  (Primärenergie) 25,3 g
Bei Stationsdurchsätzen von 2.000.000 Nm³ Erdgas pro-Stunde wurde nach Beispiel 2 mehr als 12.700 kWh/h an Primärenergie eingespart.


**Patentansprüche**

1. Verfahren zur Entsorgung von kohlenwasserstoffhaltigen Erdgas-Begleitprodukten, die auf einer mit mindestens einer Gasturbine ausgestatteten Erdgas-Kompressorstation oder Förder-Plattform ggf. durch Trocknung des Erdgases anfallen, durch Verbrennung,
dadurch gekennzeichnet,
daß die heißen Verbrennungsgase der vollständig verbrannten Begleitprodukte der verdichteten Verbrennungsluft der Gasturbine beigemischt werden.

2. Verfahren nach Anspruch 1,
dadurch gekennzeichnet,
daß die Gasturbine unabhängig von der Menge und Zusammensetzung der zu verbrennenden Begleitprodukte durch Änderung des Primärenergieeinsatzes auf konstante Leistungsabgabe geregelt wird.

3. Verfahren nach Anspruch 1 oder 2,
dadurch gekennzeichnet,
daß die Begleitprodukte mit mindestens einem Teilstrom der Verbrennungsluft, die hinter dem Verdichter der Gasturbine abgezweigt wird, gemischt und dann verbrannt werden.

4. Verfahren nach Anspruch 3,
dadurch gekennzeichnet,

daß die Beimischung der heißen Verbrennungsgase zur Verbrennungsluft der Gasturbine im Anschluß an eine Vorwärmung dieser Verbrennungsluft mittels der Abgase der Gasturbine erfolgt.

5. Verfahren nach Anspruch 3 und 4,
dadurch gekennzeichnet,
daß die gasförmige und flüssige Phase der Begleitprodukte je mit einem gesonderten Teilstrom der Verbrennungsluft gemischt und dann gemeinsam vollständig verbrannt werden.

6. Verfahren nach einem der Ansprüche 1 bis 5,
dadurch gekennzeichnet,
daß die Begleitprodukte vor der Verbrennung entwässert und/oder entschwefelt werden.

7. Vorrichtung zum Durchführen des Verfahrens nach einem der Ansprüche 1 bis 6, mit einem von einer Gasturbine angetriebenen Erdgas-Kompressor und ggf. mit einer Trockenvorrichtung für das Erdgas,
gekennzeichnet durch
eine Vorbrennkammer (18), die einerseits mindestens eine Zuleitung (12, 13) für die Begleitprodukte aufweist und über mindestens eine Abzweigleitung (16, 17) mit dem Verdichter (1) der Gasturbine in Verbindung steht sowie andererseits mit einer Mischkammer (19) kombiniert ist, die in der Leitung für Verbrennungsluft zwischen dem Verdichter (1) und der Brennkammer (2) der Gasturbine hinter einem Rekuperator (7) liegt.

8. Vorrichtung nach Anspruch 7,
dadurch gekennzeichnet,
daß der Trockenvorrichtung (8) eine mit einem Wasserabscheider versehene Trennvorrichtung (11) nachgeschaltet ist, die über die Zuleitungen (12, 13) für die flüssige und die gasförmige Phase der Begleitprodukte mit der Vorbrennkammer (18) in Verbindung steht, wobei die Zuleitungen (12, 13) eine Pumpe (15) bzw. einen Kompressor (14) enthalten.


**Claims**

1. A method for the disposal by combustion of hydrocarbon-containing natural gas compounds present at a natural gas compressor station or a production platform equipped with at least one gas turbine due to natural gas drying, dehydration or other operations characterized in that the hot products of the combustion of all said compounds are blended with the compressed combustion air for said gas turbine.

2. A method according to claim 1 characterized in that power output from said gas turbine is controlled independently of the flow and the composition of said compounds to be combusted by varying primary energy input into said gas turbine.

3. A method according to any of claims 1 or 2 characterized in that said compounds are blended with at least one partial combustion air stream branching off the main combustion air stream downstream of the compressor of said gas turbine and thereafter combusted.

4. A method according to claim 3 characterized in that said hot products of combustion are blended with the combustion air of said gas turbine following combustion air pre-heating by the exhaust of said gas turbine.

5. A method according to claims 3 and 4 characterized in that the gaseous and the liquid phases of said compounds are each blended with a separate partial stream of said combustion air and thereafter fully combusted together.

6. A method according to any of claims 1 through 5 characterized in that said compounds are dried and/or desulphurized prior to combustion.

7. An apparatus for the application of any of the methods according to any of claims 1 through 6 comprising a natural gas compressor driven by a gas turbine which may comprise a facility for drying said natural gas characterized in that a first combustion chamber (18) provided with at least one inlet line (12, 13) for said compounds and connected with the compressor (1) of said gas turbine by at least one branch line (16, 17) on the one hand and combined with a mixing chamber (19) on the other hand, said mixing chamber being integrated in the combustion air line between said compressor (1) and the combustion chamber (2) of said gas turbine downstream of a recuperator (7).

8. An apparatus according to claim 7 characterized in that a separating device (11) provided with a liquid discharge system is arranged downstream of said drying facility (8), said separating device being connected by lines (12, 13) for the liquid and the gaseous phases of said compounds with said first combustion chamber (18) and said lines (12, 13) being provided with a pump (15) and a compressor (14) respectively.

**Revendications**

1. Méthode relative à l'élimination par combustion des produits indésirables contenant des hydrocarbures dans une station de compression ou sur une plate-forme de forage équipée d'au moins une turbine à gaz et pouvant être occasionnés par la déshydratation du gaz naturel caractérisée par le fait que les fumées chaudes desdits produits complétèment brûlés sont mélangées avec l'air de combustion comprimé de ladite turbine à gaz.

2. Méthode selon la revendication 1, caractérisée par le fait qu'en modifiant l'apport d'énergie primaire à ladite turbine à gaz, celle-ci est règlée pour fournir une puissance constante indépendamment du débit et de la composition des produits indésirables qu'il s'agit de brûler.

3. Méthode selon l'une quelconque des revendications 1 ou 2, caractérisée par le fait que pour être brûlés lesdits produits indésirables sont mélangés à au moins un courant partiel de l'air de combustion, soutiré en aval du compresseur de ladite turbine à gaz.

4. Méthode selon la revendication 3, caractérisée par le fait que les fumées chaudes sont mélangées à l'air de combustion de ladite turbine à gaz après préchauffage dudit air de combustion par les fumées de ladite turbine à gaz.

5. Méthode selon les revendications 3 et 4, caractérisée par le fait que chacune de phases gazeuse et liquide desdits produits indésirables soit mélangée avec un courant partiel dudit air de combustion, les deux courants étant ensuite réunis et complétèment brûlés.

6. Méthode selon l'une quelconque des revendications 1 à 5, caractérisée par le fait que lesdits produits indésirables sont déshydratés et/ou désulfurés avant la combustion.

7. Dispositif pour l'application de la méthode selon l'une quelconque des revendications 1 à 6, comprenant un compresseur de gaz naturel entraîné par une turbine à gaz et éventuellement une installation de déshydratation du gaz naturel, caractérisé par une chambre de combustion amont (18) munie d'une part d'au moins une conduite d'amenée (12, 13) desdits produits et d'au moins une conduite de raccordement (16, 17) au compresseur (1) de la turbine à gaz et reliée d'autre part à une chambre de mélange (19) située dans la conduite de l'air de combustion entre le compresseur (1) et la chambre de combustion (2) de la turbine à gaz en aval d'un récupérateur (7).

8. Dispositif selon la revendication 7 caractérisé par le fait que l'installation de déshydratation (8) est suivie d'un séparateur (11) muni d'un système d'évacuation d'eau, ledit séparateur (11) étant raccordé à la chambre de combustion amont (18) par les conduites (12, 13) pour les phases liquide et gazeuse desdits produits, lesdites conduites d'amenée (12, 13) étant munies d'une pompe (15) resp. d'un compresseur (14).